# EUROPEAN PATENT APPLICATION

(11) **EP 0 802 550 A2**
(43) Date of publication of application: **22.10.1997**
(21) Application number: 97111237.0
(22) Date of filing: 18.05.1994
(51) Int. Cl.: H01H 25/04

(54) **Control key device**

(62) Divisional of application: 94303563.4
(71) Applicant: SEGA ENTERPRISES, LTD., Tokyo 144 (JP)
(72) Inventor: Date, Toshinori, Ohta-Ku, Tokyo (JP)
(74) Representative: Luckhurst, Anthony Henry William

(57) **Abstract**

A control key device includes a casing (3, 7, 100) having a generally dome-shaped portion (3b) provided at an arbitrary part of the casing, the dome-shaped portion having a top surface and a hole (3a) provided at a central part of the dome-shaped portion, a substrate (6) provided within the casing and having a plurality of electrical contacts (6a-6d), a resilient member (5) provided on the substrate and having a plurality of bulges (5a-5d) at positions corresponding to the electrical contacts of the substrate, each of the bulges having an electrically conductive portion which makes electrical contact with a corresponding one of the electrical contacts when the bulge to resiliently deformed, a contact pressing member (4) provided on the resilient member and having a plurality of legs (4a-4d) at positions corresponding to the bulges of the resilient member, a key (2) secured on the contact pressing member via the hole in the dome-shaped portion of the casing, the key having a home position and a tilted position, and a mechanism (120, 121, 131, 141, s, g) for preventing the key from sticking at the tilted position or an intermediate position between the tilted position and the home position. One of the legs of the contact pressing member resiliently deforms a corresponding one of the bulges of the resilient member to achieve electrical contact between the electrically conductive portion of the corresponding one bulge and a corresponding one of the electrical contacts of the substrate in the tilted position of the key, and the key has a sliding surface which makes sliding contact with the top surface of the dome-shaped portion of the casing when tilting to the tilted position.

## Description

### BACKGROUND OF THE INVENTION

The present invention generally relates to control key devices, and more particularly to a control key device which may be used as an input device for specifying a moving direction of a displayed character or the like on a video game apparatus or a portable electronic game apparatus.

A control key device having an improved response characteristic was previously proposed in a Japanese Laid-Open Patent Application No.6-52757. This previously proposed control key device includes a resilient member has four bulges with an electrically conductive portions, a contact pressing member having a spherical surface and four legs resting on the four bulges of the resilient member, a curved portion of a casing having a bottom surface making contact with the spherical surface of the contact pressing member, and a key fixed to the contact pressing member via an opening in the curved portion. A bottom surface of this key makes contact with a top surface of the curved portion.

When the key is tilted in one direction from a home position, the bottom surface of the key slides on the top surface of the curved portion, and the spherical surface of the contact pressing member slides with respect to the bottom surface of the curved portion. As a result, one of the legs pushes a corresponding bulge of the resilient member, and the electrically conductive portion of this bulge makes electrical contract with an electrical contact.

Because the spherical surface of the contact pressing member slides against the bottom surface of the curved portion of the casing, the spherical surface of the contact pressing member may stick to the bottom surface of the curved portion depending on the friction between the two surfaces. This sticking phenomenon may occur particularly when the spherical surface of the contact pressing member hits against an edge of the bottom surface of the curved portion and gets caught by the edge. When such a sticking occurs, the key will be locked to the tilted position, and the operator would have to forcibly return the key to the home position because the key will not return to the home position by itself.

### SUMMARY OF THE INVENTION

Accordingly, it is a general object of the present invention to provide a novel and useful control key device in which the probleme described above are eliminated.

Another and more specific object of the present invention is to provide a control key device which can positively prevent sticking of a key at a tilted position so that the tilted key will always return to a home position by itself.

Still another object of the present invention is to provide a control key device comprising a casing having a generally dome-shaped portion provided at an arbitrary part of the casing, the dome-shaped portion having a top surface and a hole provided at a central part of the dome-shaped portion, a substrate provided within the casing and having a plurality of electrical contacts, a resilient member provided on the substrate and having a plurality of bulges at positions corresponding to the electrical contacts of the substrate, each of the bulges having an electrically conductive portion which makes electrical contact with a corresponding one of the electrical contacts when the bulge is resiliently deformed, a contact pressing member provided on the resilient member and having a plurality of legs at positions corresponding to the bulges of the resilient member, a key secured on the contact pressing member via the hole in the dome-shaped portion of the casing, the key having a home position and a tilted position, and preventing means for preventing the key from sticking at the tilted position or an intermediate position between the tilted position and the home position, where the contact pressing member is approximately level and the legs rest on the corresponding bulges of the resilient member in the home position of the key, one of the legs of the contact pressing member resiliently deforms a corresponding one of the bulges of the resilient member to achieve electrical contact between the electrically conductive portion of the corresponding one bulge and a corresponding one of the electrical contacts of the substrate in the tilted position of the key, and the key has a sliding surface which makes sliding contact with the top surface of the dome-shaped portion of the casing when tilting from the home position to the tilted position and being automatically returned from the tilted position to the home position by a resilient restoration force exerted by the resilient member. According to the control key device of the present invention, it is possible to improve the response characteristic of the control key device. That is, the light and smooth touch (so-called feather touch) key operation becomes possible, and a quick operation of the key becomes possible.

A further object of the present invention is to provide the control key device described first above, wherein the preventing means includes a first gap formed between the sliding surface of the key and the top surface of the dome-shaped portion of the casing at the home position of the key. According to the control key device of the present invention, since the stroke required to tilt the key from a standby state is small, it is possible to minimize the gap between the key and the wall of the casing surrounding the key. This minimized gap reduces the space required to provide the key. In addition, it is possible to prevent dust particles or the like from easily entering within the control key device via this minimized gap, and also prevent the operator's finger tip from being caught within the minimized gap.

Another object of the present invention is to provide the control key device described first above, wherein the contact pressing member includes a generally spherical surface which makes sliding contact with a bottom surface of the dome-shaped portion of the casing.

Still another object of the present invention is to provide the control key device of the type described immediately above, wherein the preventing means comprises a first gap formed between the sliding surface of the key and the top surface of the dome-shaped portion of the casing at the home position of the key, and a second gap formed between the electrically conductive portion of each of the bulges of the resilient member and the corresponding electrical contact of the substrate at the home position of the key, where the second gap is greater than the first gap. According to the control key device of the present invention, since the stroke required to tilt the key from a standby state is small, it is possible to minimize the gap between the key and the wall of the casing surrounding the key. This minimized gap reduces the space required to provide the key. In addition, it is possible to prevent dust particles or the like from easily entering within the control key device via this minimized gap, and also prevent the operator's finger tip from being caught within the minimized gap.

Other objects and further features of the present invention will be apparent from the following detailed description when read in conjunction with the accomganying drawings.

### BRIEF DESCRIPTION OF THE DRAWINGS

FIG.1 is a perspective view showing an embodiment of the external appearance of a control key device according to the present invention;
FIG.2 is a cross sectional view showing a first embodiment of the control key device according to the present invention;
FIG.3 is a cross sectional view showing the first embodiment in a disassembled state;
FIG.4 is a cross sectional view showing the first embodiment in a state where a key is tilted from a home position;
FIG.5 is a cross sectional view for explaining sticking of the key at the tilted position;
FIG.6 is a cross sectional view showing an important part of a second embodiment of the control key device according to the present invention;
FIG.7 is a cross sectional view showing an important part of a third embodiment of the control key device according to the present invention;
FIG.8 is a cross sectional view showing a fourth embodiment of the control key device according to the present invention;
FIG.9 is a cross sectional view showing a fifth embodiment of the control key device according to the present invention;
FIG.10 is a perspective view showing the fifth embodiment in a disassembled state;
FIG.11 is a plan view showing the fifth embodiment;
FIG.12 is a cross sectional view showing a sixth embodiment of the control key device according to the present invention; and
FIG.13 is a perspective view showing the sixth embodiment in a disassembled state.

### DESCRIPTION OF THE PREFERRED EMBODIMENTS

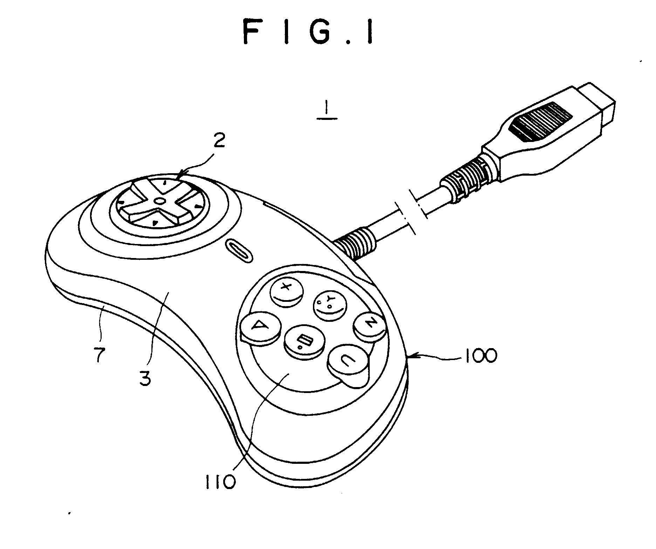

FIG.1 is a perspective view showing an embodiment of the external appearance of a control key device according to the present invention. As shown in FIG.1, a control key device 1 generally includes a key 2, a casing 100 and a plurality of buttons 110. The casing 100 is made up of upper and lower halves 3 and 7. For example, the key 2 is tilted to specify a moving direction of a displayed character or the like on a video game apparatus or a portable electronic game apparatus. The buttons 110 are manipulated to control various functions modes of the video or electronic game.

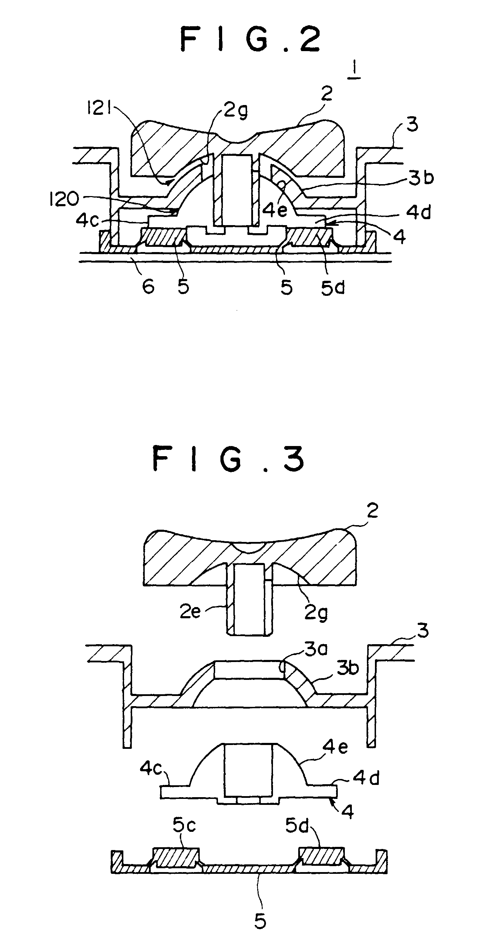

FIG.2 is a cross sectional view showing a first embodiment of the control key device according to the present invention, and FIG.3 is a cross sectional view showing the first embodiment in a disassembled state.

As shown in FIGS.2 and 3, the key portion of the control key device 1 generally includes the key 2, a dome-shaped portion 3b of the upper half 3, a contact pressing member 4, and a resilient member 5, and a wiring board (or substrate) 6. A stem portion 2e of the key 2 is secured on the contact pressing member 4 via a hole 3a in the dome-shaped portion 3b of the upper half 3.

In a home position of the key 2 shown in FIG.2, a bottom surface 2g of the key 2 makes contact with a top surface of the dome-shaped portion 3b. In addition, a bottom surface of the dome-shaped portion 3b makes contact with a spherical surface portion 4e of the contact pressing member 4.

Furthermore, in the home position of the key 2, legs 4a through 4d (only 2 shown in FIGS.2 and 3) of the contact pressing member 4 rests on corresponding bulges 5a through 5d (only 2 shown in FIGS.2 and 3) of the resilient member 5. An electrically conductive portion is provided at least on a bottom of each of the bulge 5a through 5d, and the electrically conductive portion does not make electrical contact with a corresponding electrical contact of the wiring board 6 in the home position of the key 2 shown in FIG.2.

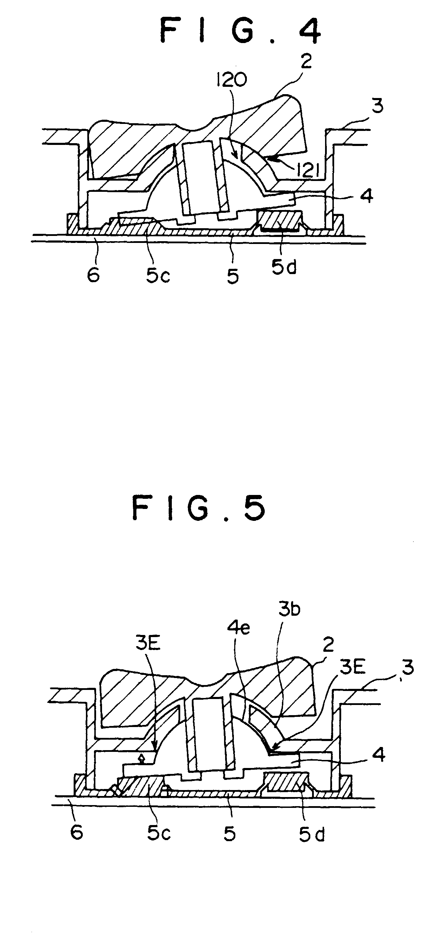

But when the operator tilts the key 2 from the home position and the leg 4c of the contact pressing member 4 presses the corresponding bulge 5c in FIG.4, for example, this electrically conductive portion makes electrical contact with the corresponding electrical contact (not shown) of the wiring board 6. As a result, an electrical circuit (not shown) detects the tilted direction of the key 2 based on the contact at the electrical contact.

When the operator lets go of the tilted key 2 in FIG.4, the key 2 returns to the home position shown in FIG.2 by itself due to the resilient force of the resilient member 5, that is, the bulge 5c.

When the key 2 is tilted from the home position shown in FIG.2 to the tilted position shown in FIG.4, the bottom surface 2g of the key 2 slides on the top surface of the dome-shaped portion 3b, and the spherical surface portion 4e of the contact pressing member 4 slides against the bottom surface of the dome-shaped portion 3b. Similarly, the bottom surface 2g of the key 2 and the spherical surface portion 4e of the contact pressing member 4 relatively slide against the dome-shaped portion 3b when the key 2 returns from the tilted position to the home position.

However, depending on the friction between the bottom surface 2g of the key 2 and the top surface of the dome-shaped portion 3b and the friction between the spherical surface portion 4e and the bottom surface of the dome-shaped portion 3b, there is a possibility of the key 2 sticking at the tilted position or an intermediate position between the tilted position and the home position.

For this reason, it is conceivable to increase the resilient force exerted by the resilient member 5. However, this would require more force to tilt the key 2 from the home position to the tilted position, and the light and smooth touch (so-called feather touch) key operation becomes impossible to make and a quick operation of the key 2 becomes difficult.

On the other hand, in order to increase the resilient force of the resilient member 5, it is conceivable to increase the gap between the electrically conductive portions of the bulges 5a through 5d and the wiring board 6 in the home position of the key 2. But in this latter case, it would require the key 2 to be tilted with a larger stroke in order to achieve the electrical contact between the electrically conductive portion and the corresponding electrical contact of the wiring board 6. As a result, the light and smooth touch key operation becomes impossible to make, and it becomes impossible to make a quick key operation. Furthermore, the need to tilt the key 2 with the large stroke would require more space to provide the key 2 on the control key device 1.

In addition, the above described sticking of the key 2 may occur particularly when the spherical surface portion 4e of the contact pressing member 4 pushes against an edge 3E at the bottom part of the dome-shaped portion 3b as shown in FIG.5. In order to guarantee the restoration of the pressed bulges 5a through 5d, it is in general necessary to provide a gap of approximately 1 mm between the electrically conductive portion of the bulge and the wiring board 6 in the home position of the key 2. For this reason, there is a limit to reducing the pushing force of the spherical surface portion 4e acting on the edge 3E. In other words, the restoration of the bulges 5a through 5d and thus the automatic return of the tilted key 2 to the home position cannot be guaranteed if the resilient force exerted by the resilient member 5 is too small, but if the resilient force exerted by the resilient member 5 is too large, the possibility of the spherical surface portion 4e becoming caught by the edge 3E increases.

In first embodiment of the control key device of the present invention, a lubricant film 120 is provided at least between the spherical surface portion 4a and the bottom surface of the dome-shaped portion 3b. For example, a grease or the like may be used as the lubricant. In addition, it is also possible to provide a lubricant film 121 between the bottom surface 2g of the key 2 and the top surface of the dome-shaped portion 3b. The lubricant films 120 and 121 may be coated on either of the two surfaces which relatively slide with respect to one another, for example.

According to the first embodiment, it is possible to prevent sticking of the key 2 at the tilted position or the intermediate position between the tilted position and the home position. In addition, it is possible to maintain the light and smooth touch key operation and to make the quick operation of the key 2.

As a modification of the first embodiment, it is possible to use a material which has a lubricative surface for the key 2, the dome-shaped portion 3b, and the spherical portion 4e. According to this modification, it becomes unnecessary to provide the lubricant film.

The characteristic of the lubricant may deteriorate with time, and it may be difficult to maintain a uniform lubricant film without maintenance of the control key device. Hence, a description will now be given of embodiments of the control key device according to the present invention which can eliminate such possible problems of the first embodiment.

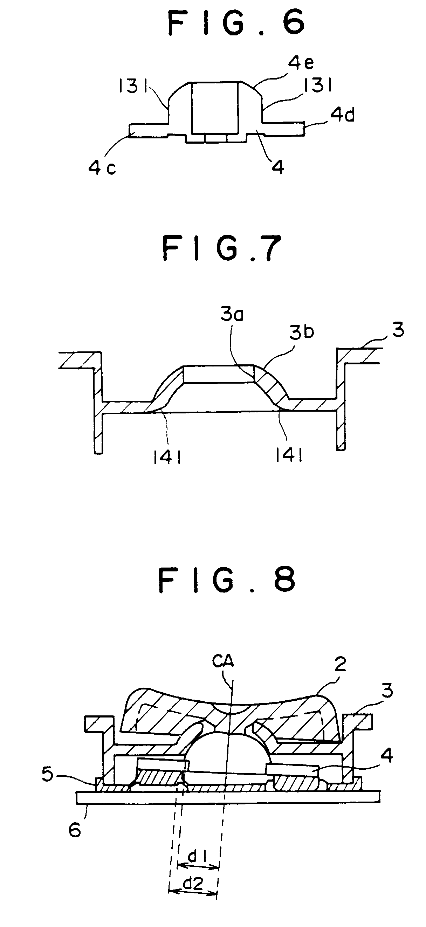

FIG.6 is a cross sectional view showing an important part of a second embodiment of the control key device according to the present invention. More particularly, FIG.6 shows the contact pressing member 4.

In this second embodiment, a cutout portion 131 is provided at the lower part of the spherical surface portion 4e corresponding to the position of the edge 3E of the dome-shaped portion 3b shown in FIG.5.

According to this second embodiment, the edge 3E of the dome-shaped portion 3b cannot catch the spherical surface portion 4e of the contact pressing member 4 because of the provision of the cutout portion 131. As a result, it is always possible to prevent sticking of the key 2 at the tilted position or the intermediate position between the tilted position and the home position. In addition, the light and smooth touch key operation can be maintained, and it is possible to make the quick operation of the key 2.

FIG.7 is a cross sectional view showing an important part of a third embodiment of the control key device according to the present invention. More particularly, FIG.7 shows the dome-shaped portion 3b of the upper half 3.

In this third embodiment, a rounded portion 141 is provided at a position corresponding to the edge 3E shown in FIG.5. A radius of curvature of this rounded portion 141 is greater than that of the remaining bottom surface part of the dome-shaped portion 3b. As a result, it is always possible to prevent sticking of the key 2 at the tilted position or the intermediate position between the tilted position and the home position. In addition, the light and smooth touch key operation can be maintained, and it is possible to make the quick operation of the key 2.

FIG.8 is a cross sectional view showing a fourth embodiment of the control key device according to the present invention. In FIG.8, those parts which are the same as those corresponding parts in FIGS.1 through 5 are designated by the same reference numerals, and a description thereof will be omitted. FIG.8 shows the fourth embodiment in the tilted position of the key 2.

In this fourth embodiment, a maximum horizontal distance d1 between a center axis CA of the key 2 and the bottom surface of the spherical surface portion 4e is set smaller than a horizontal distance d2 between the center axis CA and an inner edge of each of the bulges 5a through 5d of the resilient member 5. The distance d1 is essentially the horizontal distance between the center axis CA and the edge 3E shown in FIG.5. As a result, the resilient force exerted by the bulge 5d acts at a position further away from the edge 3E relative to the center axis CA when compared to the case shown in FIG.5, and it is possible to more smoothly return the key 2 to the home position due to the leverage function.

However, as described above, the distance between the electrically conductive portion of the bulge and the electrical contact of the wiring board in the normal state where the key is at the home position must be set to a predetermined value in order to avoid erroneous contact and to guarantee the return of the bulge to the normal state after being pushed by the leg of the contact pressing member. For this reason, it is necessary to tilt the key a predetermined amount in order to achieve the electrical contact between the electrically conductive portion of the bulge and the electrical contact. As a result, there is a limit to reducing the stroke distance of the key, and depending on this stroke distance, it may take time to realize the electrical contact described above and the response characteristic of the control key device may become poor.

On the other hand, to enable a large stroke of the key when tilting the key, it becomes necessary to provide a sufficiently large gap around the key. As a result, the space required to provide the key increases. In addition, the provision of the sufficiently large gap around the key may easily allow dust particles or the like to enter within the control key device, and the operator's finger tip may be pinched between the key and the surrounding wall within this sufficiently large gap.

Next, a description will be given of embodiments of the control key device according to the present invention which can realize quick electrical contact and realize a satisfactory response characteristic.

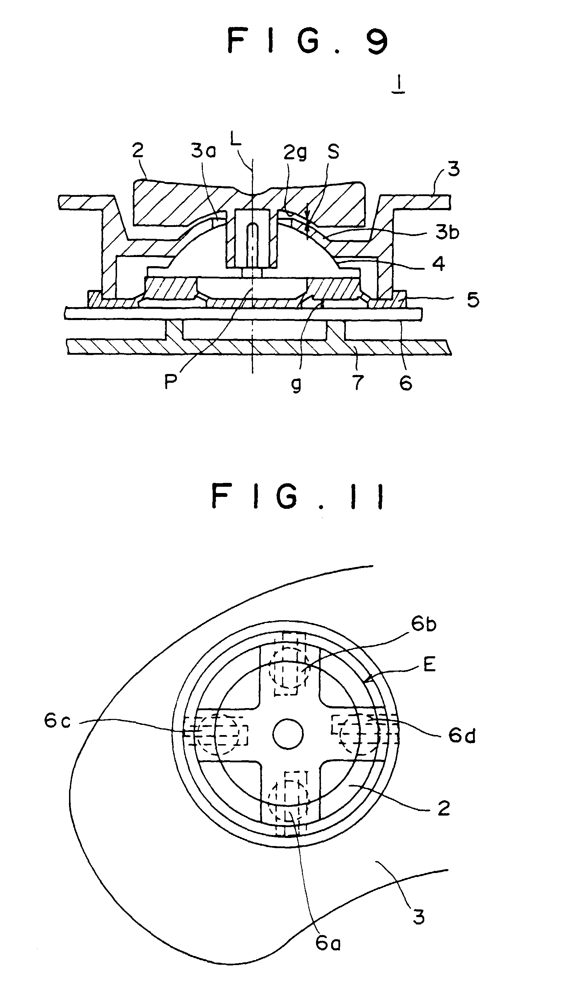

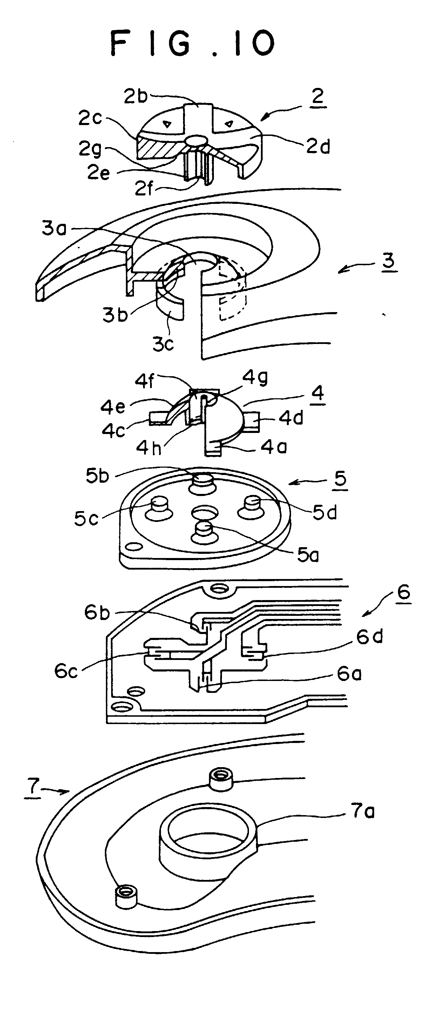

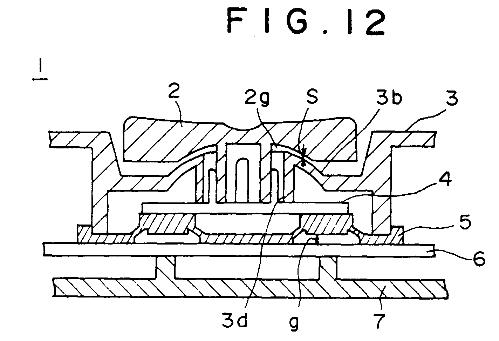

FIG.9 is a cross sectional view showing a fifth embodiment of the control key device according to the present invention, and FIG.10 shows a perspective view of the fifth embodiment in a disassembled state. In addition, FIG.11 is a plan view showing the fifth embodiment. In FIGS.9 through 11, those parts which are the same as those corresponding parts in FIGS.1 through 5 are designated by the same reference numerals.

The control key device 1 shown in FIGS.9 through 11 generally includes the key 2, the upper half 3 of the casing 100, a contact pressing member 4, the resilient member 5, the wiring board 6, and the lower half 7 of the casing 100. For example, the key 2 may be made of a nylon resin, the upper and lower halves 3 and 7 may be made of an ABS resin, and the contact pressing member 4 may be made of a polyacetal resin.

As shown in FIGS.10 and 11, a pair of electrical contacts 6a and 6b and a pair of electrical contacts 6c and 6d are symmetrically arranged on a circumference E of the wiring board 6. In addition, as shown in FIG.9, the upper half 3 and the lower half 7 are connected by screws (not shown), for example, and the key portion is generally held within the casing 100. A ring-shaped wall 7a is provided on the lower half 7 at a position corresponding to the electrical contacts 6a through 6d of the wiring board 6 as shown in FIG.10. Hence, the ring-shaped wall 7a supports the wiring board 6 immediately below the electrical contacts 6a through 6d in the assembled state of the control key device 1.

The bulges 5a through 5d of the resilient member 5 are arranged at positions above the corresponding electrical contacts 6a through 6d on the wiring board 6. An electrically conductive portion is provided at least on a bottom of each of the bulges 5a through 5d. Hence, when the key 2 is tilted from the home position and the bulge 5c is pressed from the top and resiliently deformed, for example, the electrically conductive portion of this bulge 5a makes electrical contact with the corresponding electrical contact 6c on the wiring board 6. Hence, and electric circuit (not shown) detects the tilted direction of the key 2 based on the contact at the electrical contact. As shown in FIG.9, a gap g exists between the electrical contacts 6a through 6d and the corresponding electrically conductive portions of the bulges 5a through 5d. For example, this gap g is set to 1 mm.

For example, the electrical circuit for detecting the tilted direction of the key 2 based on the electrical contact between the corresponding electrical contact and the electrically conductive portion of the bulge is described in a Japanese Laid-Open Utility Model Application No.4-42029, and a detailed description of this electrical circuit and the direction detection method will be omitted in this specification.

The upper half 3 generally covers the surface of the wiring board 6. The upper half 3 has a cavity with the dome-shaped portion 3b and the hole 3a in this dome-shaped portion 3b. This hole 3a is concentric to the circumference E described above, and shares a center line L shown in FIG.9. A center P of curvature of the top surface (outer surface) of the dome-shaped portion 3b is located approximately at the center of the vertical height position of the electrically conductive portions of the bulges 5a through 5d.

The key 2 has a generally mushroom shape, that is, an approximate T-shaped cross section. A disk portion of the key 2 is exposed at the cavity of the upper half 3, and projections 2a through 2d forming a cross are provided on the top surface of the disk portion. In addition, a hollow cylindrical stem portion 2e extends downwards from the disk portion of the key 2. A cutout 2f which extends vertically is provided on the inner surface of the stem portion 2e. Furthermore, a sliding surface 2g is provided on the bottom of the disk portion of the key 2. This sliding surface 2g makes sliding contact with the top surface of the dome-shaped portion 3b when the key 2 is tilted from the home position. For example, the sliding surface 2g may be formed by a curved surface corresponding to the top surface of the dome-shaped portion 3b or, by projections which form a cross in correspondence with the top surface of the dome-shaped portion 3b. In the latter case, the projections on the bottom of the disk portion of the key 2 are provided at positions corresponding to the projections 2a through 2d, for example.

The contact pressing member 4 includes the legs 4a through 4d having horizontal bottom surfaces which make contact with the corresponding bulges 5a through 5d of the resilient member 5, and the spherical surface portion 4e which makes contact with the bottom surface (inner surface) of the dome-shaped portion 3b. A circular hole 4f is formed in the contact pressing member 4 from the top central part of the spherical surface portion 4e towards the bottom surface of the contact pressing member 4. The stem portion 2e of the key 2 fits into this hole 4f. The hole 4f is provided with a projection 4g which fits into the cutout 2f when the stem portion 2e is fitted into the hole 4f. Hence, it is possible to fix the rotational position and the vertical position of the key 2 relative to the contact pressing member 4.

The ring-shaped wall 3c extends downwardly from the outer periphery of the dome-shaped portion 3b, and this ring-shaped wall 3c has 4 cutouts corresponding to the positions of the legs 4a through 4d. Hence. in the assembled state of the control key device 1, tips of the legs 4a through 4d project via the corresponding cutouts in the ring-shaped wall 3c. The legs 4a through 4d of the contact pressing member 4 can push against the corresponding bulges 5a through 5d of the resilient member 5, so as to achieve electrical contact between the electrically conductive portions of the bulges 5a through 5d and the corresponding electrical contacts 6a through 6d on the wiring board 6.

The projections 2a through 2d which form a cross on the top of the key 2 are arranged to correspond to the electrical contacts 6a through 6d of the wiring board 6. The key 2 is connected to the contact pressing member 4 by inserting the step portion 2e into the hole 4f of the contact pressing member 4 via the hole 3a in the dome-shaped portion 3b. In the connected state, the tip end of the stem portion 3e makes contact with a surface 4h at the bottom of the hole 4f, and the projection 4g fits into the cutout 2f. The diameter of the hole 3a is greater than the diameter of the stem portion 2e so that the key 2 is free to tilt in all directions.

In the home position of the key 2 shown in FIG.9, a gap s is formed between the bottom surface 2g of the key 2 and the top surface of the dome-shaped portion 3b. For example, this gap s is set in a range of 0.3 mm to 0.5 mm. In addition, the legs 4a through 4d of the contact pressing member 4 rest on the corresponding bulges 5a through 5d of the resilient member 5, and the spherical surface portion 4e of the contact pressing member 4 makes contact with the bottom surface of the dome-shaped portion 3b. In this state, the spherical surface portion 4e can slide relative to the bottom surface of the contact pressing member 4.

When the operator gently places his finger on the key 2, the legs 4a through 4d of the contact pressing member 4 are displaced downwards against the resilient force exerted by the resilient member 5. As a result, the bottom surface 2g of the key 2 and the top surface of the dome-shaped portion 3b. In this standby state of the key, the bottom surface 2g of the key 2 can elide relative to the top surface of the dome-shaped portion 3b. In addition, the legs 4a through 4d of the contact pressing member 4 uniformly press the bulges 5a through 5d of the resilient member 5, but the vertical displacement is such that the electrically conductive portions of the bulges 5a through 5d will not make electrical contact with the electrical contacts 6a through 6d of the wiring board 6.

The above described vertical displacement of the key 2 amounts to the distance corresponding to the gap s. Even if the electrically conductive portions of the bulges 5a through 5d are displaced downwards by the distance corresponding to the gap s, the electrically conductive portions will not make electrical contact with the electrical contacts 6a through 6d because the gap g is set greater than the gap s.

When the operator wishes to tilt the key 2 from the standby state so that the electrical contact is achieved between the electrically conductive portion of the bulge 5c and the electrical contact 6c, the operator pushes the projection 2c of the key 2 by his finger with a force of 70 g to 80 g, for example. In response to this pushing force applied on the key 2, the bottom surface 2g of the key 2 slides on the top surface of the dome-shaped portion 3b and the contact pressing member 4 tilts. As a result, the leg 4c of the contact pressing member 4 presses against the bulge 5c of the resilient member 5.

The center P of curvature of the dome-shaped portion 3c is located at the center of the vertical height position of the electrically conductive portions. For this reason, the leg 4c presses the bulge 5c downwards approximately in the vertical direction. As a result, the bulge 5c is resiliently deformed and the electrically conductive portion thereof makes electrical contact with the corresponding electrical contact 6c.

In the standby state where the operator's finger is placed on the key 2, the key 2 is already displaced downwards by the distance corresponding to the gap s, and the bottom surface 2g of the key 2 is in contact with the top surface of the dome-shaped portion 3b. Hence, the distance between the electrically conductive portion of the bulge 5c and the electrical contact 6a is already reduced to g-s. Accordingly, when the projection 2c of the key 2 is pushed in this standby state, the bottom surface 2g of the key 2 slides on the top surface of the dome-shaped portion 3b, and the contact pressing member 4 is tilted by an amount such that the leg 4c is displaced downwards by the distance g-s. When the contact pressing member 4 tilts, the leg 4d on the opposite end from the leg 4c is displaced upwards within the corresponding cutout in the ring-shaped wall 3c of the upper half 3.

Therefore, even if the gap g is set so as to guarantee the automatic return of the key 2 from the tilted position to the home position, the tilting of the key 2 can be achieved by a relatively small force and the required stroke is small because the key 2 is tilted from the standby state described above. As a result, it is possible to improve the response characteristic of the control key device 1. That is, the light and smooth touch (so-called feather touch) key operation becomes possible, and a quick operation of the key 2 becomes possible.

Furthermore, since the stroke required to tilt the key 2 from the standby state is small, it is possible to minimize the gap between the key 2 and the wall of the upper half 3 surrounding the key 2. This minimized gap reduces the space required to provide the key 2. In addition, it is possible to prevent dust particles or the like from easily entering within the control key device 1 via this minimized gap, and also prevent the operator's finger tip from being caught within the minimized gap.

On the other hand, when the operator releases the tilted key 2, the resilient restoration force of the bulge 5c of the resilient member 5 pushes the leg 4c of the contact pressing member 4 upwards. Hence, the contact pressing member 4 is displaced upwards until the spherical surface portion 4e makes contact with the bottom surface of the dome-shaped portion 3b. In addition, the bottom surface 2g of the key 2 separates from the top surface of the dome-shaped portion 3b, and the key 2 returns to the home position shown in FIG.9.

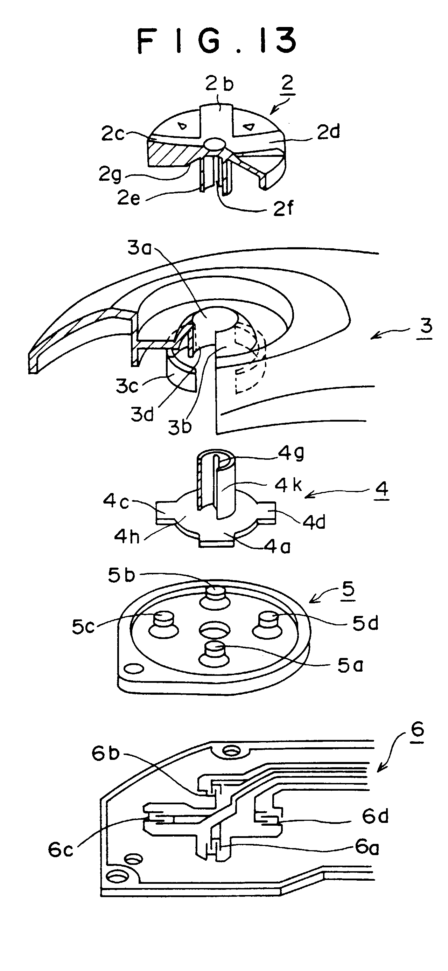

Next, a description will be given of a sixth embodiment of the control key device according to the present invention, by referring to FIGS.12 and 13. FIG.12 is a cross sectional view showing the sixth embodiment, and FIG.13 is a perspective view showing the sixth embodiment in a disassembled state. In FIGS.12 and 13, those parts which are the same as those corresponding parts in FIGS.9 through 11 are designated by the same reference numerals, and a description thereof will be omitted.

This sixth embodiment is basically the same as the fifth embodiment, except that the contact pressing member 4 of this sixth embodiment does not have the spherical surface portion 4a.

As shown in FIGS.12 and 13, the contact pressing member 4 includes a boss portion 4k which is provided with the projection 4g which extends in the vertical direction. The stem portion 2e of the key 2 is press-fit into the boss portion 4k in a state where the protection 4g fits into the cutout 2f. The outer diameter of the boss portion 4k is smaller than the inner diameter of a ring-shaped wall portion 3d of the upper half 3 so that the key 2 is free to tilt from the home position.

When the operator releases the key 2 from the tilted position, the legs 4a through 4d of the contact pressing member 4 is returned to the level state due to the action of the resilient restoration force exerted by the resilient member 5. When the contact pressing member 4 returns to the level state, this contact pressing member 4 is maintained at the central position within the cavity of the casing 100 by the action of the cutouts in the ring-shaped wall 3c corresponding to the legs 4a through 4d, and the top surface of the contact pressing member 4 makes contact with the lower end of the ring-shaped wall portion 3d of the upper half 3. Since the legs 4e through 4d of the contact pressing member 4 are respectively guided by the cutouts in the ring-shaped wall 3c, the contact pressing member 4 can always be maintained at the central position (neutral position) in the home position of the key 2. In this home position of the key 2, the gap s described above is formed between the bottom surface 2g of the key 2 and the top surface of the dome-shaped portion 3b.

According to this sixth embodiment, it is possible to obtain substantially the same effects as in the case of the fifth embodiment described above.

In the described embodiments, the stem portion 2e of the key 2 is secured on the contact pressing member 4. However, it is of course possible to provide the stem portion on the contact pressing member 4 and secure this stem on the key 2.

In addition, although the dome-shaped portion 3b has a continuous surface in the described embodiments, it is possible to provide openings in the dome-shaped portion 3b as long as the required rigidity and strength can be obtained. Similarly, it is also possible to provide openings in the spherical surface portion 4e if the required rigidity and strength can be obtained.

Moreover, although 4 electrical contacts are provided in the described embodiments, the number of electrical contacts and the corresponding bulges of the resilient member is of course not limited to 4.

In the embodiments described above, the physical fulcrum of the key which tilts is not located on the wiring board (or substrate). For this reason, it is possible to prevent an undesired external force from being applied on the wiring board even if the external force is applied on the key. By preventing the undesirable external force from reaching the wiring board, it is possible to prevent damage to the wiring and contacts provided on the wiring board. In other words, in the described embodiments, the key is not tilted about a physical point, but is tilted while being guided by at least a dome-shaped or curved surface of the casing.

In addition, it is of course possible to combine the structures of the various embodiments described above.

Further, the present invention is not limited to these embodiments, but various variations and modifications may be made without departing from the scope of the present invention.

## Claims

1. A control key device, comprising:
a casing (3) having a top surface and a hole (3a);
a substrate (6) provided within the casing (3) and having a plurality of electrical contacts (6a-6d) disposed in a symmetrical positional relationship;
a resilient member (5) provided on the substrate (6) and having a plurality of bulges (5a-5d), each of the bulges (5a-5d) having an electrically conductive portion disposed on and closely spaced from the corresponding electrical contact (6a-6d) so that each of the conductive portions constitutes an electrical switch with the corresponding electrical contact (6a-6d) when a bulge (5a-5d) is resiliently deformed;
a contact pressing member (4) provided on the resilient member (5) and having a plurality of legs (4a-4d) at positions corresponding to the bulges (5a-5d); and
a key (2) secured to the contact pressing member (4) via the hole (3a) in the casing (3), the key having a home position and at least one tilted position;
the contact pressing member (4) being approximately level and the legs (4a-4d) resting on the corresponding bulges (5a-5d) in the home position of the key (2), one of the legs (4a-4d) of the contact pressing member (4) resiliently deforming a corresponding one of the bulges (5a-5d) to achieve electrical contact between the electrically conductive portion of the bulge and a corresponding one of the electrical contacts (6a-6d) when the key (2) is in a tilted position, the key (2) having a sliding surface (2g) which makes sliding contact with the casing (3) when the key (2) is moved into a tilted position and being automatically returned to the home position by a resilient restoration force exerted by the resilient member (5);
the device being characterized in that the casing (3) is provided at an arbitary part thereof with a generally dome-shaped portion which forms a stopper member (3b) disposed under the key (2) and spaced from the substrate (6), the hole (3a) being provided at a control part of the stopper member (3b), the key (2) being maintained in its home position by the stopper member (3b) and the bulges (5a-5d) when the key (2) is free of a manipulating force;
and in that the device further comprises:
sticking prevention means (120, 121, 131, 141) for preventing the key (2) from sticking at a tilted position when the key (2) is released.

2. A control key device according to claim 1, further characterized in that the key (2) has a bottom surface facing an upper surface of the dome-shaped portion (3b), and in that the sticking prevention means comprises lubricant means provided between the bottom surface of the key (2) and the upper surface of the dome-shaped portion (3b).

3. A control key device according to claim 1, wherein said dome-shaped portion (3b) has a spherical lower surface which constitutes said stopper member, characterized in that said contact pressing member (4) comprises a spherical upper surface (4e) and a cutout portion (131) formed at a periphery of said spherical upper surface of said contact pressing member so that a corner line at which the surface of said cutout portion meets the upper surfaces of the legs (4a-4d) of the contact pressing (4) is remotely spaced from the spherical lower surface of said dome-shaped portion (3b).

4. A control key device according to claim 1, wherein the dome-shaped portion (3b) is supported so as to be spaced from the substrate (6) by supporting means, further characterized in that an edge portion (141) at which the spherical lower surface of said dome-shaped portion (3b) meets said supporting means is rounded.

5. A control key device according to claim 1, wherein the dome-shaped portion (3b) is supported so a to be spaced from the substrate by supporting means, further characterized in that a maximum horizontal distance (d1) between a center axis (CA) of said key (2) and an edge portion at which the spherical lower surface of said dome-shaped portion (3b) meets said supporting means is smaller than a horizontal distance (d2) between the center axis and an inner edge of said bulges (5a-5d).
